(19) Europäisches Patentamt
European Patent Office
Office européen des brevets

(11) **EP 4 394 928 A1**

(12) **EUROPEAN PATENT APPLICATION**
published in accordance with Art. 153(4) EPC

(43) Date of publication:
**03.07.2024 Bulletin 2024/27**

(21) Application number: **22939093.5**

(22) Date of filing: **28.04.2022**

(51) International Patent Classification (IPC):
***H01M 4/36*** $^{(2006.01)}$

(52) Cooperative Patent Classification (CPC):
**H01M 4/36; Y02E 60/10**

(86) International application number:
**PCT/CN2022/089911**

(87) International publication number:
**WO 2023/206241 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde City, Fujian Province 352100 (CN)**

(72) Inventors:
- **CHENG, Shiyang**
  **Ningde, Fujian 352100 (CN)**
- **SHITABA, Jumpei**
  **Ningde, Fujian 352100 (CN)**
- **LANG, Ye**
  **Ningde, Fujian 352100 (CN)**
- **XU, Leimin**
  **Ningde, Fujian 352100 (CN)**

(74) Representative: **Icosa**
**83 avenue Denfert-Rochereau**
**75014 Paris (FR)**

(54) **POSITIVE ELECTRODE MATERIAL AND ELECTROCHEMICAL APPARATUS COMPRISING SAME, AND ELECTRONIC APPARATUS**

(57) This application relates to a positive electrode material and an electrochemical apparatus and an electronic apparatus using such positive electrode material. When an electrode including such positive electrode material is assembled with lithium metal to form a button cell and the button cell is charged and discharged at a current of 0.04C in the voltage range of 2.8 V to 4.5 V, a differential capacity versus voltage dQ/dV curve obtained has a first oxidation peak and a first reduction peak in a range of 4.2 V to 4.5 V. The positive electrode material has high energy density as well as improved kinetic performance and high-temperature stability.

FIG. 2

EP 4 394 928 A1

**Description**

**TECHNICAL FIELD**

This application relates to the field of energy storage technologies, and in particular, to a positive electrode material and an electrochemical apparatus and an electronic apparatus using such positive electrode material.

**BACKGROUND**

As consumer electronic products such as notebook computers, mobile phones, tablet computers, mobile power supplies, and drones are popularized, requirements for batteries are becoming increasingly stringent. For example, batteries are not only required to be light but also required to have high capacity and long service life. Lithium-ion batteries have become dominant in the market due to outstanding advantages such as high energy density, high safety, no memory effect, and long service life. In pursuit of higher energy density, the research on lithium-ion batteries has been focusing on increasing voltage and amount of extracted lithium. Under the high voltage and high lithium extraction level, problems of surface oxygen release and structural phase change of the positive electrode materials in lithium-ion batteries are fully exposed, which brings about problems of cycling performance degradation and gas production in lithium-ion batteries.

Currently, the gas production problem during high-temperature storage of lithium-ion batteries is mainly alleviated by optimizing the electrolyte and positive electrode, for example, using oxidation-resistant electrolyte or coating surfaces of the positive electrode materials. Typically, the surfaces of positive electrode materials are coated with nano-oxides. The nano-oxide is a non-chemically active substance. Coating the inactive surfaces of positive electrode materials with nano-oxides cannot play a protective role, while coating the active surfaces of positive electrode materials with nano-oxides hinders migration of lithium-ions and affects the extractable capacity of materials. Solvent molecules in common oxidation-resistant electrolytes have long molecular chains, which can reduce gas production but worsens lithium-ion transport kinetics, leading to lower rate performance and higher temperature rise of lithium-ion batteries.

**SUMMARY**

This application provides a positive electrode material to solve at least one problem in the related field to at least some extent.

This application provides a positive electrode material. When an electrode including the positive electrode material is assembled with lithium metal to form a button cell and the button cell is charged and discharged at a current of 0.04C in the voltage range of 2.8 V to 4.5 V, a differential capacity versus voltage dQ/dV curve obtained has a first oxidation peak and a first reduction peak in the range of 4.2 V to 4.5 V. The presence of the first oxidation peak and the first reduction peak in the range of 4.2 V to 4.5 V in the differential capacity versus voltage dQ/dV curve of the button cell indicates that the positive electrode material has a reversible charge/discharge capacity in the high voltage range of 4.2 V to 4.5 V due to the presence of internal oxygen defects, making the positive electrode material have a high energy density and good structural stability.

According to some embodiments of this application, based on a mass of the positive electrode material, a peak height of the first oxidation peak is greater than or equal to 300 mAh/g/V. In this case, the positive electrode material has a relatively high charge capacity in the high voltage range of 4.2 V to 4.5 V, making the positive electrode material have a higher energy density. According to some embodiments of this application, based on the mass of the positive electrode material, the peak height of the first oxidation peak is 300 mAh/g/V to 2000 mAh/g/V.

According to some embodiments of this application, based on a mass of the positive electrode material, an absolute value of a peak height of the first reduction peak is greater than or equal to 300 mAh/g/V. In this case, the positive electrode material has a relatively high discharge capacity in the high voltage range of 4.2 V to 4.5 V, making the positive electrode material have a higher energy density. According to some embodiments of this application, based on the mass of the positive electrode material, the absolute value of the peak height of the first reduction peak is 300 mAh/g/V to 2000 mAh/g/V.

According to some embodiments of this application, a peak voltage of the first oxidation peak is Vo1, a peak voltage of the first reduction peak is Vr1, and |Vo1 - Vr1| ≤ 0.3 V. In this case, the positive electrode material has a good reversibility for charging and discharging in the high voltage range of 4.2 V to 4.5 V and has a good structural stability.

According to some embodiments of this application, the differential capacity versus voltage dQ/dV curve has a second oxidation peak and a second reduction peak in the range of 3.6 V to 4.0 V, where a peak voltage of the second oxidation peak is Vo2, a peak voltage of the second reduction peak is Vr2, and |Vo2 - Vr2| ≤ 0.2 V. In this case, the positive electrode material in the range of 3.6 V to 4.0 V mainly experiences a transition process from hexagonal phase to monoclinic phase. This process involves transport of lithium ions and electrons. Due to the presence of oxygen defects, overall conductivity of the lithium ions and electrons in the material is enhanced, and the kinetic performance of the material is significantly improved. Therefore, the polarization in this process is reduced, resulting in a smaller difference between peak voltages of the second oxidation peak and the second reduction peak.

According to some embodiments of this application, when the button cell is charged and discharged at a current of 0.04C in the voltage range of 2.8 V to 4.5 V, a discharge curve in a voltage capacity curve obtained has a plateau in the range of 4.2 V to 4.5 V, where a capacity in the range of 4.2 V to 4.5 V is Q1 in the discharge curve, and a capacity in the range of 3.0 V to 4.5 V is Qt in the discharge curve, satisfying $0.14 \leq Q1/Qt \leq 0.35$. In this case, the positive electrode material has a relatively high capacity in the high voltage range of 4.2 V to 4.5 V, making the positive electrode material have a higher energy density.

According to some embodiments of this application, a lattice parameter a of the positive electrode material satisfies $2.5\ \text{Å} \leq a \leq 3.0\ \text{Å}$.

According to some embodiments of this application, a lattice parameter c of the positive electrode material satisfies $14.2\ \text{Å} \leq c \leq 15\ \text{Å}$. When the lattice parameter c of the positive electrode material is within the foregoing range, the positive electrode material has a relatively large Li-O interlayer spacing, which improves the kinetic performance of the positive electrode material.

According to some embodiments of this application, $4.93 \leq c/a \leq 5.10$.

According to some embodiments of this application, an X-ray diffraction pattern of the positive electrode material has diffraction peaks in the ranges of 16° to 20°, 34° to 38°, and 42° to 46°.

According to some embodiments of this application, the positive electrode material includes a lithium transition metal composite oxide.

According to some embodiments of this application, the lithium transition metal composite oxide includes element M and element T, where the element M includes at least one of Na, K, or Y, and the element T includes at least one of Ni, Co, or Mn. Element M with high ionic radius is doped in the lithium layer, which can increase the lithium-oxygen interlayer spacing, thereby enhancing the kinetic performance of the positive electrode material.

According to some embodiments of this application, based on a total molar content of the element T, a molar percentage of Ni is greater than or equal to 50%.

According to some embodiments of this application, based on a total molar content of the element T, a molar percentage of Mn is less than or equal to 50%.

According to some embodiments of this application, based on a total molar content of the element T, a molar percentage of Co is less than or equal to 50%.

According to some embodiments of this application, based on a total molar content of the element T, a molar percentage of the element M is 0.1% to 5%.

According to some embodiments of this application, the lithium transition metal composite oxide further includes element Q, where the element Q includes at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf; and based on a total molar content of the element T, a molar percentage of the element Q is 0.1% to 5%. Element Q can support the transition metal layer, thereby enhancing the structural stability of the positive electrode material.

According to some embodiments of this application, the lithium transition metal composite oxide further includes element M1, where M1 includes at least one of F, Cl, Br, I, N, or P; and based on a total molar mass of the element T, a molar percentage of the element M1 is 0.1% to 20%.

This application further provides a preparation method of such positive electrode material, including the following steps: 1) calcining a precursor with a lithium source, an element M source, optionally an element Q source and optionally an element M1 source at a first temperature for a first duration time under a first atmosphere condition; 2) lowering the temperature to a second temperature and maintaining the second temperature for a second duration time under a second atmosphere condition; and 3) finally lowering the temperature to room temperature; where the first atmosphere is selected from an air atmosphere, an oxygen atmosphere, or a mixed atmosphere of air and oxygen; the precursor includes element T, and element T includes at least one of Ni, Co, or Mn; element M includes at least one of Na, K, or Y; element Q includes at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf; element M1 includes at least one of F, Cl, Br, I, N, or P; and the second atmosphere is selected from at least one of an inert atmosphere or a mixed atmosphere of an inert gas and $H_2$.

According to some embodiments of this application, the first temperature is 700°C to 1200°C, and the first duration time is 10 h to 48 h.

According to some embodiments of this application, the second temperature is 350°C to 600°C, and the second duration time is 4 h to 24 h.

According to some embodiments of this application, the inert gas is selected from at least one of $N_2$, Ar, or He.

According to some embodiments of this application, a cooling rate in step 3) is greater than or equal to 50°C/min.

According to some embodiments of this application, based on a total volume of the mixed atmosphere of the inert gas and $H_2$, a volume percentage of $H_2$ in the mixed atmosphere of the inert gas and $H_2$ is less than or equal to 10%.

According to some embodiments of this application, the precursor includes a hydroxide of element T.

According to some embodiments of this application, the lithium source includes at least one of lithium carbonate or lithium hydroxide.

According to some embodiments of this application, the element M source includes at least one of a carbonate or hydroxide of element M.

According to some embodiments of this application, the element Q source includes an oxide of element Q.

According to some embodiments of this application, the element M1 source includes at least one of an ammonium salt or a lithium salt of element M1.

According to some embodiments of this application, based on a total molar content of the element T, a molar percentage of Ni is greater than or equal to 50%.

According to some embodiments of this application, based on a total molar content of the element T, a molar percentage of Mn is less than or equal to 50%.

According to some embodiments of this application, based on a total molar content of the element T, a molar percentage of Co is less than or equal to 50%.

According to some embodiments of this application, based on a total molar content of the element T, a molar percentage of the element M is 0.1% to 5%.

According to some embodiments of this application, based on a total molar content of the element T, a molar percentage of the element Q is 0.1% to 5%.

According to some embodiments of this application, based on a total molar content of the element T, a molar percentage of the element M1 is 0.1% to 20%.

This application further provides an electrochemical apparatus including the foregoing positive electrode material according to any one of the foregoing embodiments or a positive electrode material obtained using the preparation method according to any one of the foregoing embodiments.

This application further provides an electronic apparatus including the electrochemical apparatus according to any one of the foregoing embodiments.

Additional aspects and advantages of this application are partly described and presented in subsequent descriptions, or explained by implementation of the embodiments of this application.

## BRIEF DESCRIPTION OF DRAWINGS

To describe embodiments of this application, the following briefly describes the accompanying drawings required for describing the embodiments of this application or the prior art. Apparently, the accompanying drawings described below are merely some embodiments of this application. Persons skilled in the art may still derive drawings for other embodiments from structures shown in these accompanying drawings.

FIG. 1 shows a charge/discharge curves of button cells in Comparative Example 1, Comparative Example 2, and Example 11.

FIG. 2 shows the differential capacity versus voltage dQ/dV curves for the button cells in Comparative Example 1 and Example 11.

FIG. 3 shows X-ray diffraction patterns of the positive electrode materials in Comparative Example 1 and Example 11.

## DETAILED DESCRIPTION OF EMBODIMENTS

Embodiments of this application are described in detail below. The embodiments described herein are illustrative in nature and are intended to provide a basic understanding of this application. The embodiments of this application should not be construed as a limitation on this application.

In the specific embodiments and claims, an item list connected by the terms "at least one of", "at least one piece of", "at least one kind of" or other similar terms may mean any combination of the listed items. For example, if items A and B are listed, the phrase "at least one of A and B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

A ternary material is commonly used as a positive electrode material. The ternary material generates capacity mainly through the valence change of two elements, nickel and cobalt. A capacity of the ternary material is related to its nickel content, and a higher nickel content means a higher capacity of the ternary material. Manganese in the ternary material is in a valence of +4 and does not provide capacity, which limits the energy density of the ternary material. In addition, low electrochemical activity of manganese leads to poor kinetic performance of the ternary material. In the case of deep lithium extraction, oxygen ions on surfaces of the ternary material are highly active, which are prone to side react with the electrolyte, resulting in increased interface impedance or gas production. In addition, a small lithium-oxygen interlayer spacing in the ternary material usually hinders diffusion of lithium ions at the end of discharge, resulting in sluggish kinetics and low capacity of the material.

The inventors have found that introducing oxygen defects inside the positive electrode material can activate the oxidation-reduction quality of transition metals, thereby greatly increasing the energy density of the positive electrode material. In addition, the oxygen vacancies formed on surfaces of the positive electrode material can reduce the activity of oxygen on the surfaces of the positive electrode material and stabilize the oxygen ions on the surfaces of the material, thereby inhibiting gas production caused by the positive electrode material releasing oxygen during high temperature cycling. Further, the inventors have found that doping the lithium layer with elements of high ionic radius can increase the lithium-oxygen interlayer spacing, thereby enhancing the kinetic performance of the material.

In this application, synthesis in combination with element doping in the lithium layer can be used to regulate the internal oxygen defects and lithium-oxygen interlayer spacing in the positive electrode material, making the positive electrode material in this application have high energy density, high kinetic performance, and improved high-temperature stability.


**I. Positive electrode material**

This application provides a positive electrode material. When an electrode including the positive electrode material is assembled with lithium metal to form a button cell and the button cell is charged and discharged at a current of 0.04C in the voltage range of 2.8 V to 4.5 V, a differential capacity versus voltage dQ/dV curve obtained has a first oxidation peak and a first reduction peak in the range of 4.2 V to 4.5 V.

The presence of the first oxidation peak and the first reduction peak in the range of 4.2 V to 4.5 V in the differential capacity versus voltage dQ/dV curve of the button cell indicates that the positive electrode material has a reversible charge/discharge capacity in the high voltage range of 4.2 V to 4.5 V due to the presence of internal oxygen defects, making the positive electrode material have a high energy density and good structural stability.

In some embodiments, based on a mass of the positive electrode material, a peak height of the first oxidation peak is greater than or equal to 300 mAh/g/V. In this case, the positive electrode material has a relatively high charge capacity in the high voltage range of 4.2 V to 4.5 V, making the positive electrode material have a higher energy density. In some embodiments, based on the mass of the positive electrode material, the peak height of the first oxidation peak is 300 mAh/g/V to 2000 mAh/g/V. In some embodiments, based on the mass of the positive electrode material, the peak height of the first oxidation peak may be 300 mAh/g/V, 400 mAh/g/V, 500 mAh/g/V, 600 mAh/g/V, 700 mAh/g/V, 800 mAh/g/V, 900 mAh/g/V, 1000 mAh/g/V, 1100 mAh/g/V, 1200 mAh/g/V, 1300 mAh/g/V, 1400 mAh/g/V, 1500 mAh/g/V, 1800 mAh/g/V, 2000 mAh/g/V, or a range formed by any two of the above values, such as 300 mAh/g/V to 1000 mAh/g/V, 500 mAh/g/V to 1500 mAh/g/V, 600 mAh/g/V to 1500 mAh/g/V, 700 mAh/g/V to 1500 mAh/g/V, or 1000 mAh/g/V to 1500 mAh/g/V.

In some embodiments, based on a mass of the positive electrode material, an absolute value of a peak height of the first reduction peak is greater than or equal to 300 mAh/g/V In this case, the positive electrode material has a relatively high discharge capacity in the high voltage range of 4.2 V to 4.5 V, making the positive electrode material have a higher energy density. In some embodiments, based on the mass of the positive electrode material, the absolute value of the peak height of the first reduction peak is 300 mAh/g/V to 2000 mAh/g/V. In some embodiments, based on the mass of the positive electrode material, the absolute value of the peak height of the first reduction peak may be 300 mAh/g/V, 400 mAh/g/V, 500 mAh/g/V, 600 mAh/g/V, 700 mAh/g/V, 800 mAh/g/V, 900 mAh/g/V, 1000 mAh/g/V, 1100 mAh/g/V, 1200 mAh/g/V, 1300 mAh/g/V, 1400 mAh/g/V, 1500 mAh/g/V, 1800 mAh/g/V, 2000 mAh/g/V, or a range formed by any two of the above values, such as 300 mAh/g/V to 1000 mAh/g/V, 500 mAh/g/V to 1500 mAh/g/V, 600 mAh/g/V to 1500 mAh/g/V, 700 mAh/g/V to 1500 mAh/g/V, or 1000 mAh/g/V to 1500 mAh/g/V.

In some embodiments, a peak voltage of the first oxidation peak is Vo1, a peak voltage of the first reduction peak is Vr1, and $|Vo1 - Vr1| \leq 0.3$ V. In this case, due to the presence of oxygen defects, the binding force on lithium ions inside the two-dimensional channels is significantly reduced, so the diffusion of lithium ions is significantly improved. The presence of oxygen defects also activates small polaron defects in transition metals and enhances electronic conductivity of the material, so that the positive electrode material has a better reversibility for charging and discharging in the high voltage range of 4.2 V to 4.5 V and has good structural stability. In some embodiments, $|Vo1 - Vr1|$ may be 0.3 V, 0.27 V, 0.25 V, 0.23 V, 0.20 V, 0.17 V, 0.16 V, 0.15 V, 0.14 V, 0.13 V, 0.12 V, 0.11 V, 0.10 V, 0.09 V, 0.08 V, 0.07 V, 0.06 V, 0.05 V, 0.04 V, 0.03 V, 0.02 V, 0.01 V, or the like; or may be any of the above values, such as 0.3 V, 0.27 V, 0.25 V, 0.23 V, 0.20 V, 0.17 V, 0.16 V, 0.15 V, 0.14 V, 0.13 V, 0.12 V, 0.10 V, 0.09 V, 0.08 V, 0.07 V, 0.06 V, 0.05 V, 0.04 V, 0.03 V, or the like; or may be a range formed by any two of the above values, such as 0.03 V to 0.27 V, 0.05 V to 0.27 V, or 0.01 V to 0.3 V.

In some embodiments, the differential capacity versus voltage dQ/dV curve has a second oxidation peak and a second reduction peak in the range of 3.6 V to 4.0 V, where a peak voltage of the second oxidation peak is Vo2, a peak voltage of the second reduction peak is Vr2, and |Vo2 - Vr2| ≤ 0.2 V. In this case, the positive electrode material in the range of 3.6 V to 4.0 V mainly experiences a transition process from hexagonal phase to monoclinic phase. This process involves transport of lithium ions and electrons. Due to the presence of oxygen defects, overall conductivity of the lithium ions and electrons in the material is enhanced, and the kinetic performance of the material is significantly improved. Therefore, the polarization in this process is reduced, resulting in a smaller difference between peak voltages of the second oxidation peak and the second reduction peak. In some embodiments, |Vo2 - Vr2| may be 0.20 V, 0.19 V, 0.17 V, 0.16 V, 0.15 V, 0.14 V, 0.13 V, 0.12 V, 0.11 V, 0.10 V, 0.09 V, 0.08 V, 0.07 V, 0.06 V, 0.05 V, 0.04 V, 0.03 V, 0.02 V, 0.01 V, or a range formed by any two of the above values, such as 0.02 V to 0.19 V, 0.02 V to 0.12 V, or 0.1 V to 0.20 V.

In some embodiments, when the button cell is charged and discharged at a current of 0.04C in the voltage range of 2.8 V to 4.5 V, a discharge curve in a voltage capacity curve obtained has a plateau in the range of 4.2 V to 4.5 V, where a capacity in the range of 4.2 V to 4.5 V is Q1 in the discharge curve, and a capacity in the range of 3.0 V to 4.5 V is Qt in the discharge curve, satisfying $0.14 \leq Q1/Qt \leq 0.35$. In this case, the positive electrode material has a relatively high capacity in the high voltage range of 4.2 V to 4.5 V, making the positive electrode material have a higher energy density.

In some embodiments, Q1/Qt may be 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, or a range formed by any two of the above values, such as 0.14 to 0.28, 0.16 to 0.28, or 0.20 to 0.35.

In some embodiments, a lattice parameter a of the positive electrode material satisfies $2.5 \text{ Å} \leq a \leq 3.0 \text{ Å}$. In some embodiments, a lattice parameter c of the positive electrode material satisfies $14.2 \text{ Å} \leq c \leq 15 \text{ Å}$. In some embodiments, $4.93 \leq c/a \leq 5.10$. Generally, in the hexagonal crystal system, an a-axis lattice parameter is related to a valence of the transition metal, and a c-axis lattice parameter is related to a spacing between the lithium layer and transition metal layer. In the presence of oxygen defects, the binding between Li-O layers is reduced, the Li-O interlayer spacing is increased, and the transition metal layer spacing is reduced, and correspondingly, the c axis is enlarged, improving the kinetic performance of the positive electrode material. The a axis is mainly related to the valences of transition metals, and the presence of oxygen defects can drive the transition metals to change to lower valences, and the a axis is enlarged to some extent.

In some embodiments, a may be 2.5 Å, 2.6 Å, 2.7 Å, 2.8 Å, 2.82 Å, 2.84 Å, 2.86 Å, 2.88 Å, 2.9 Å, 3.0 Å, or a range formed by any two of the above values, such as 2.6 Å to 2.9 Å, 2.8 Å to 2.9 Å, 2.82 Å to 2.9 Å, or 2.86 Å to 2.9 Å.

In some embodiments, c may be 14.2 Å, 14.22 Å, 14.24 Å, 14.26 Å, 14.28 Å, 14.3 Å, 14.35 Å, 14.4 Å, 14.45 Å, 14.5 Å, 14.6 Å, 14.7 Å, 14.8 Å, 14.9 Å, 15 Å, or a range formed by any two of the above values, such as 14.22 Å to 14.4 Å, 14.24 Å to 14.8 Å, 14.3 Å to 14.8 Å, or 14.3 Å to 14.6 Å.

In some embodiments, c/a may be 4.93, 4.94, 4.95, 4.96, 4.97, 4.98, 4.99, 5.00, 5.01, 5.02, 5.03, 5.04, 5.05, 5.06, 5.07, 5.08, 5.09, 5.10, or a range formed by any two of the above values, such as 4.96 to 5.00, 4.96 to 5.05, 4.96 to 5.09, or 4.98 to 5.09.

In some embodiments, an X-ray diffraction pattern of the positive electrode material has diffraction peaks in the ranges of 16° to 20°, 34° to 38° and 42° to 46°.

In some embodiments, the positive electrode material includes a lithium transition metal composite oxide.

In some embodiments, the lithium transition metal composite oxide includes element M and element T, where the element M includes at least one of Na, K, or Y, and the element T includes at least one of Ni, Co, or Mn. Element M with high ionic radius is doped in the lithium layer, which can increase the lithium-oxygen interlayer spacing, thereby enhancing the kinetic performance of the material.

In some embodiments, based on a total molar content of the element T, a molar percentage of Ni is greater than or equal to 50%.

In some embodiments, based on a total molar content of the element T, a molar percentage of Mn is less than or equal to 50%. In some embodiments, a molar percentage of Mn is greater than or equal to 30%.

In some embodiments, based on a total molar content of the element T, a molar percentage of Co is less than or equal to 50%. In some embodiments, a molar percentage of Co is greater than or equal to 10%.

In some embodiments, based on a total molar content of the element T, a molar percentage of the element M is 0.1% to 5%.

In some embodiments, the positive electrode material may be an element M-doped composite oxide containing element Li and element T, where element M includes at least one of Na, K, or Y, and element T includes at least one of Ni, Co, or Mn. For example, the positive electrode material may be element M-doped $LiNi_{0.5}Mn_{0.5}O_2$ (hereinafter denoted as $LiMNi_{0.5}Mn_{0.5}O_2$), where element M may be Na, K, Y, or Na + Y. Based on a total molar content of elements Ni and Mn, a doping percentage of element M may be 0.10%, 0.20%, 0.50%, 1.00%, 2.00%, 3.00%, 4.00%, 5.00%, or the like.

In some embodiments, the lithium transition metal composite oxide may further include element Q, where element Q includes at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf. Based on a total molar content of element T, a molar percentage of element Q is 0.1% to 5%. Element Q can support the transition metal layer, thereby enhancing the structural stability of the positive electrode material.

In some embodiments, the positive electrode material may be an element M- and Q-doped composite oxide containing element Li and element T. Element M includes at least one of Na, K, or Y, element T includes at least one of Ni, Co, or Mn, and element Q includes at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf. For example, the positive electrode material may be element M- and Q-doped $LiNi_{0.5}Mn_{0.5}O_2$ (hereinafter denoted as $LiMQNi_{0.5}Mn_{0.5}O_2$), where element M is Na, and element Q is Zr, Ti, W, Ta, or Sn. Based on a total molar content of elements Ni and Mn, doping percentages of elements M and Q may each independently be 0.10%, 0.20%, 0.50%, 1.00%, 2.00%, 3.00%, 4.00%, 5.00%, or the like.

In some embodiments, the lithium transition metal composite oxide may further include element M1, where M1 is at least one of F, Cl, Br, I, N, or P; and based on a total molar content of the element T, a molar percentage of the element M1 is 0.1% to 20%.

In some embodiments, the positive electrode material may be element M-doped $LiTO_{1.9}M1_{0.1}$. Element M includes at least one of Na, K, or Y, element T includes at least one of Ni, Co, or Mn, and element M1 includes at least one of F, Cl, Br, I, N, or P. For example, the positive electrode material may be element M-doped $LiNi_{0.5}Mn_{0.5}O_{1.9}F_{0.1}$ (hereinafter denoted as $LiMNi_{0.5}Mn_{0.5}O_{1.9}F_{0.1}$) or element M-doped $LiNi_{0.5}Mn_{0.5}O_{1.9}Cl_{0.1}$ (hereinafter denoted as $LiMNi_{0.5}Mn_{0.5}O_{1.9}Cl_{0.1}$). Element M is Na, K, or Y.

In some embodiments, the positive electrode material satisfies the general formula $Li_xM_y(Ni_aCo_bMn_cQ_d)O_eM1_f$, $0 < x + y \leq 2$, $0 \leq a, b, c, d \leq 1$, a, b, c, and d are not simultaneously 0, $0 < e \leq 3$, and $0 \leq f < 1$. Element M is at least one of Na, K, or Y, element Q is Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf, and M1 is at least one of F, Cl, Br, I, N, or P.

In some embodiments, the positive electrode material includes element Li, where based on a mass of the positive electrode material, a mass percentage of element Li is greater than 5%.

In some embodiments, the positive electrode material includes element Li and other metal elements. The other metal elements may include at least one of element M, element T, or element Q. A ratio of molar content of element Li to the sum of molar content of other metal elements is greater than 0.5 and less than 2.

In some embodiments, a preparation method of such positive electrode material includes the following steps: 1) calcining a precursor with a lithium source, an element M source, optionally an element Q source and optionally an element M1 source at a first temperature for a first duration time under a first atmosphere condition; 2) lowering the temperature to a second temperature and maintaining the second temperature for a second duration time under a second atmosphere condition; and 3) finally lowering the temperature to room temperature. The first atmosphere is selected from an air atmosphere, an oxygen atmosphere, or a mixed atmosphere of air and oxygen; the precursor includes element T, and element T includes at least one of Ni, Co, or Mn; element M includes at least one of Na, K, or Y; element Q includes at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf; element M1 includes at least one of F, Cl, Br, I, N, or P; and the second atmosphere is selected from at least one of an inert atmosphere or a mixed atmosphere of an inert gas and $H_2$. In this application, an inert gas or a mixture of inert gas and $H_2$ is introduced during the cooling process after calcining, and temperature is maintained for a period, so as to introduce oxygen defects inside the positive electrode material. This can activate oxidation-reduction quality of the transition metal, thereby substantially increasing the energy density of the positive electrode material.

In some embodiments, the first temperature is 700°C to 1200°C, and the first duration time is 10 h to 48 h. In some embodiments, the first temperature may be 700°C, 800°C, 900°C, 1000°C, 1100°C, 1200°C, or a range formed by any two of the above values. In some embodiments, the first duration time may be 10 h, 12 h, 16 h, 18 h, 24 h, 36 h, 48 h, or a range formed by any two of the above values.

In some embodiments, the second temperature is 350°C to 600°C, and the second duration time is 4 h to 24 h. In some embodiments, the second temperature may be 350°C, 400°C, 450°C, 500°C, 550°C, 600°C, or a range formed by any two of the above values. In some embodiments, the second duration time may be 4 h, 6 h, 8 h, 10 h, 12 h, 16 h, 18 h, 24 h, or a range formed by any two of the above values.

In some embodiments, the inert gas is selected from at least one of $N_2$, Ar, or He.

In some embodiments, a cooling rate in step 3) is greater than or equal to 50°C/min.

In some embodiments, based on a total volume of the mixed atmosphere of the inert gas and $H_2$, a volume percentage of $H_2$ in the mixed atmosphere of the inert gas and $H_2$ is less than or equal to 10%. In some embodiments, based on the total volume of the mixed atmosphere of the inert gas and $H_2$, the volume percentage of $H_2$ in the mixed atmosphere of the inert gas and $H_2$ may be 1%, 2%, 3%, 4%, 5%, 6%, 7%, 8%, 9%, 10%, or a range formed by any two of the above values, such as 1% to 3% or 5% to 10%.

In some embodiments, the precursor includes a hydroxide of element T.

In some embodiments, the lithium source includes at least one of lithium carbonate or lithium hydroxide.

In some embodiments, the element M source includes at least one of a carbonate or hydroxide of element M.

In some embodiments, the element Q source includes an oxide of element Q.

In some embodiments, the element M1 source includes at least one of an ammonium salt or a lithium salt of element M1.

In some embodiments, based on a total molar content of the element T, a molar percentage of Ni is greater than or equal to 50%.

In some embodiments, based on a total molar content of the element T, a molar percentage of Mn is less than or equal to 50%.

In some embodiments, based on a total molar content of the element T, a molar percentage of Co is less than or equal to 50%.

In some embodiments, based on a total molar content of the element T, a molar percentage of the element M is 0.1% to 5%.

In some embodiments, based on a total molar content of the element T, a molar percentage of the element Q is 0.1% to 5%.

In some embodiments, based on a total molar content of the element T, a molar percentage of the element M1 is 0.1% to 20%.

## II. Electrochemical apparatus

This application provides an electrochemical apparatus including a positive electrode, a negative electrode, a separator, and an electrolyte, where the positive electrode includes a positive electrode material layer, and the positive electrode material layer includes the foregoing positive electrode material.

In some embodiments, the positive electrode material layer further includes a binder. The binder enhances bonding between particles of the positive electrode material and bonding between the positive electrode material and the positive electrode current collector.

In some embodiments, the binder includes at least one of styrene-butadiene rubber (SBR), waterborne acrylic resin, carboxymethyl cellulose (CMC), polyvinylidene fluoride (PVDF), polytetrafluoroethylene (PTFE), polyvinyl butyral (PVB), ethylene vinyl acetate copolymer (EVA), or polyvinyl alcohol (PVA), but is not limited thereto. The binder may be selected based on actual requirements.

In some embodiments, based on a total weight of the positive electrode material layer, a weight percentage of the binder is less than or equal to 5.0%. In some embodiments, based on the total weight of the positive electrode material layer, the weight percentage of the binder is 5.0%, 4.0%, 3.0%, 2.0%, 1.5%, 1.0%, 0.5%, 0.3%, 0.1%, or a range formed by any two of the above values, such as 0.1% to 2.0%, 0.5% to 2.0%, 0.1% to 1.0%, or 1.0% to 2.0%.

In some embodiments, the positive electrode material layer further includes a conductive agent. The conductive agent includes at least one of graphite, acetylene black, carbon black, Ketjen black, carbon nanotubes, graphene, or carbon nanofibers, but is not limited thereto, and the conductive agent may be selected based on actual requirements.

In some embodiments, based on a total weight of the positive electrode material layer, a weight percentage of the conductive agent is greater than or equal to 0.5%. In some embodiments, based on the total weight of the positive electrode material layer, the weight percentage of the conductive agent is greater than or equal to 1.0%, greater than or equal to 1.5%, or the like.

In some embodiments, the positive electrode current collector may be a metal foil or a porous metal plate, such as a foil or porous plate made of metal such as aluminum, copper, nickel, titanium, silver, or an alloy thereof, for example, aluminum foil. This is not limited.

In some embodiments, a thickness of the positive electrode current collector is 5 $\mu$m to 20 $\mu$m, such as 5 $\mu$m, 6 $\mu$m, 7 $\mu$m, 8 $\mu$m, 10 $\mu$m, 12 $\mu$m, 14 $\mu$m, 16 $\mu$m, 18 $\mu$m, 20 $\mu$m, or a range formed by any two of the above values, such as 6 $\mu$m to 18 $\mu$m or 8 $\mu$m to 16 $\mu$m.

In some embodiments, the positive electrode may be prepared according to a preparation method known in the art. For example, the positive electrode may be obtained according to the following method: mixing the positive electrode material, the conductive agent and the binder in a solvent to prepare a positive electrode slurry, and applying the positive electrode slurry on the positive electrode current collector, followed by drying, cold pressing and other processes, to obtain the positive electrode. In some embodiments, the solvent may include N-methylpyrrolidone (NMP) and the like, but is not limited thereto.

In some embodiments, a negative electrode may be a lithium metal plate, or may include a negative electrode current collector and a negative electrode material layer disposed on at least one surface of the negative electrode current collector.

In some embodiments, the negative electrode material layer includes a negative electrode material and optionally includes a conductive agent and a binder.

In some embodiments, the negative electrode material may include one or more of natural graphite, artificial graphite, mesocarbon microbead (MCMB), hard carbon, soft carbon, silicon, silicon-carbon complex, SiO, Li-Sn alloy, Li-Sn-O alloy, Li-Al alloy, or lithium metal.

In some embodiments, the conductive agent may include one or more of acetylene black, carbon black, Ketjen black, carbon nanotubes, graphene, or carbon nanofibers.

In some embodiments, the binder may be one or more of styrene-butadiene rubber, polyvinylidene fluoride, polytetrafluoroethylene, polyvinyl butyral, waterborne acrylic resin, or carboxymethyl cellulose.

The negative electrode in the electrochemical apparatus of this application is not limited to the foregoing materials. In this application, other materials that can be used as negative electrode materials, conductive agents, binders and thickeners for lithium-ion batteries may be used.

The negative electrode current collector can use materials such as metal foil or porous metal plates, for example, a foil or porous plate made of metal such as copper, nickel, titanium, iron, or an alloy thereof, for example, copper foil.

The negative electrode may be prepared according to a conventional method in the art. Typically, the negative electrode material, and optionally the conductive agent and binder are dispersed in a solvent to form a uniform negative electrode slurry, where the solvent may be N-methylpyrrolidone or water. The negative electrode slurry is applied to the negative electrode current collector, followed by drying, cold pressing, and other processes, to obtain the negative electrode.

The separator in the electrochemical apparatus of this application is not particularly limited, and any well-known porous structured separator with electrochemical stability and chemical stability can be used, such as single or multilayer film of one or more of glass fiber, non-woven fabrics, polyethylene (PE), polypropylene (PP) and polyvinylidene difluoride.

The electrolyte in the electrochemical apparatus of this application may include an organic solvent, an electrolyte lithium salt and additives. This application does not specifically limit types of the organic solvent and the electrolyte lithium salt, which can be selected based on actual requirements.

In some embodiments, the organic solvent may be at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), vinylene carbonate (VC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfone (MSM), ethyl methyl sulfone (EMS), or diethyl sulfone (ESE). In some embodiments, the organic solvent includes at least two of the foregoing compounds.

In some embodiments, the electrolyte lithium salt may be one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO$_2$F$_2$), lithium difluoro(dioxalato)phosphate (LiDFOP), and lithium tetrafluoro oxalato phosphate (LiTFOP).

In some embodiments, the additives in the electrolyte may include a nitrile compound, where the nitrile compound includes one or more of butanedinitrile, glutaronitrile, hexanedinitrile, or 1,3,6-hexanetricarbonitrile.

In some embodiments, the electrolyte may optionally contain other additives, and the other additives may be any additive that can be used for lithium-ion batteries. The additives are not specifically limited herein, and may be selected based on actual requirements.

The electrochemical apparatus of this application can be prepared according to a conventional method in the art. For example, the foregoing positive electrode, separator and negative electrode are stacked in sequence so that the separator is sandwiched between the positive electrode and the negative electrode for separation; the resulting stack is wound to obtain an electrode assembly; and the electrode assembly is placed in the package housing, followed by electrolyte injection and sealing, to obtain the electrochemical apparatus.

### III. Electronic apparatus

The electrochemical apparatus according to this application is applicable to electronic apparatuses in various fields.

The electrochemical apparatus according to this application is not particularly limited to any purpose, and may be used for any known purposes in the prior art. In one embodiment, the electrochemical apparatus of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

**IV. Examples**

Below, this application will be further specifically described with examples and comparative examples, and this application is not limited to these embodiments as long as the essence of this application is not changed.

**1. Preparation of positive electrode material**

**Comparative Example 1**

1) A mixed solution containing $NiSO_4$ and $MnSO_4$ was prepared according to an elemental molar ratio of Ni:Mn = 50:50, mixed and reacted with a precipitant (NaOH solution) and a complexing agent (ammonia), with the ammonia concentration controlled to be 1 mol/L and pH = 12.2, to obtain a precursor $Ni_{0.5}Mn_{0.5}(OH)_2$ with an average particle size $D_v50$ of 11 μm.
2) The precursor in the foregoing step 1) and lithium carbonate were ground and mixed well according to a molar ratio of Li:element T (Ni/Mn) being 1.02, calcined at 800°C under air atmosphere for 20 h, cooled down to room temperature at a rate of 10°C/min, and finally crushed and sieved to obtain the positive electrode material.

**Comparative Example 2**

1) Preparation of precursor $Ni_{0.5}Mn_{0.5}(OH)_2$ was the same as that in Comparative Example 1.
2) The precursor in the foregoing step 1), lithium carbonate, and sodium carbonate were ground and mixed well according to a molar ratio of Li:element T (Ni/Mn) being 1.02 and the doping concentration of Na (molar percentage of Na to element T) being 0.1%, calcined at 800°C for 20 h under air atmosphere, cooled down to room temperature at a rate of 10°C/min, and finally crushed and sieved to obtain the positive electrode material.

**Comparative Example 3**

(1) A mixed solution containing $NiSO_4$, $MnSO_4$ and $CoSO_4$ was prepared according to an elemental molar ratio of Ni:Mn:Co = 50:30:20, mixed and reacted with the precipitant (NaOH solution) and complexing agent (ammonia), with the ammonia concentration controlled to be 1 mol/L and pH = 12.2, to obtain a precursor $Ni_{0.5}Mn_{0.3}Co_{0.2}(OH)_2$ with an average particle size $D_v50$ of 11 μm.
2) The precursor in the foregoing step 1), lithium carbonate, and sodium carbonate were ground and mixed well according to a molar ratio of Li:element T (Ni/Mn/Co) being 1.02 and the doping concentration of Na being 1%, calcined at 800°C under air atmosphere for 20 h, cooled down to room temperature at a rate of 50°C/min, and finally crushed and sieved to obtain the positive electrode material.

**Example 1**

The difference with Comparative Example 2 is that in step 2), after calcined at 800°C under air atmosphere for 20 h, the temperature was lowered to 600°C at a rate of 10°C/min, $N_2$ was introduced according to Table 1, and after being maintained under such condition for 6 h, quenched to room temperature at the corresponding cooling rate in Table 1, and then crushed and sieved, so as to obtain the positive electrode material.
**Example 2** differs from Example 1 in that in step 2), a mixed gas of $N_2$ and $H_2$ was introduced according to Table 1.
**Examples 3 to 5** differ from Example 2 in that in step 2), the doping concentrations of Na were respectively 0.2%, 0.5%, and 1%.
**Examples 6 to 7** differ from Example 5 in that the precursors in step 1) were respectively $Ni_{0.5}Mn_{0.4}Co_{0.1}(OH)_2$ and $Ni_{0.5}Mn_{0.3}Co_{0.2}(OH)_2$.
**Examples 8 to 9** differ from Example 5 in that in step 2), $NH_4F$ and $NH_4Cl$ were respectively further added in the grinding and mixing step.
**Example 10** differs from Example 5 in that in step 2), the doping concentration of Na was 2%.
**Examples 11 to 12** differ from Example 5 in that in step 2), the mixed gas of $N_2$ and $H_2$ was introduced according to Table 1 and quenched to room temperature at the corresponding cooling rate in Table 1.

**Examples 13 to 15** differ from Example 5 in that in step 2), sodium carbonate was replaced with potassium carbonate and a mixed gas of $N_2$ and $H_2$ was introduced according to Table 1 and quenched to room temperature at the corresponding cooling rate in Table 1.

**Examples 16 to 19** differ from Example 5 in that in step 2), sodium carbonate was replaced with yttrium carbonate and a mixed gas of $N_2$ and $H_2$ was introduced according to Table 1 and quenched to room temperature at the corresponding cooling rate in Table 1.

**Example 20** differs from Example 18 in that in step 2), yttrium carbonate was replaced with a mixture of yttrium carbonate and sodium carbonate, and the doping concentrations of Na and Y were each 0.5%.

**Examples 21 to 25** differ from Example 12 in that in step 2), the element Q source was further added in the grinding and mixing step, the element Q sources were respectively $ZrO_2$, $TiO_2$, $WO_3$, $Ta_2O_5$, and $SnO_2$, and the doping concentration of element Q (molar percentage of element Q to element T) is 0.5%.

Table 1 shows the doping elements, doping tcontent, volume percentages of nitrogen and hydrogen, and cooling rates in the Comparative Examples 1 to 3 and Examples 1 to 25.

**Table 1**

| | Chemical formula | M doping element | M doping concentration | Q doping element | Q doping concentration | $N_2$ | $H_2$ | Cooling rate (°C/min) |
|---|---|---|---|---|---|---|---|---|
| Comparative Example 1 | $LiNi_{0.5}Mn_{0.5}O_2$ | / | 0 | / | / | / | / | 10 |
| Comparative Example 2 | $LiMNi_{0.5}Mn_{0.5}O_2$ | Na | 0.1% | / | / | / | / | 10 |
| Comparative Example 3 | $LiMNi_{0.5}Mn_{0.3}Co_{0.2}O_2$ | Na | 1% | / | / | / | / | 50 |
| Example 1 | | Na | 0.1% | / | / | 100% | 0% | 50 |
| Example 2 | | Na | 0.1% | / | / | 99% | 1% | 50 |
| Example 3 | $LiMNi_{0.5}Mn_{0.5}O_2$ | Na | 0.2% | / | / | 99% | 1% | 50 |
| Example 4 | | Na | 0.5% | / | / | 99% | 1% | 50 |
| Example 5 | | Na | 1% | / | / | 99% | 1% | 50 |
| Example 6 | $LiMNi_{0.5}Mn_{0.4}Co_{0.1}O_2$ | Na | 1% | / | / | 99% | 1% | 50 |
| Example 7 | $LiMNi_{0.5}Mn_{0.3}Co_{0.2}O_2$ | Na | 1% | / | / | 99% | 1% | 50 |
| Example 8 | $LiMNi_{0.5}Mn_{0.5}O_{1.9}F_{0.1}$ | Na | 1% | / | / | 99% | 1% | 50 |
| Example 9 | $LiMNi_{0.5}Mn_{0.5}O_{1.9}Cl_{0.1}$ | Na | 1% | / | / | 99% | 1% | 50 |

| | Chemical formula | M doping element | M doping concentration | Q doping element | Q doping concentration | $N_2$ | $H_2$ | Cooling rate (°C/min) |
|---|---|---|---|---|---|---|---|---|
| Example 10 | $LiMNi_{0.5}Mn_{0.5}O_2$ | Na | 2% | / | / | 99% | 1% | 50 |
| Example 11 | | Na | 1% | / | / | 97% | 3% | 70 |
| Example 12 | | Na | 1% | / | / | 95% | 5% | 70 |
| Example 13 | | K | 1% | / | / | 99% | 1% | 50 |
| Example 14 | | K | 1% | / | / | 97% | 3% | 60 |
| Example 15 | | K | 1% | / | / | 95% | 5% | 70 |
| Example 16 | | Y | 1% | / | / | 99% | 1% | 50 |
| Example 17 | | Y | 1% | / | / | 97% | 3% | 70 |
| Example 18 | | Y | 1% | / | / | 95% | 5% | 70 |
| Example 19 | | Y | 1% | / | / | 90% | 10% | 90 |
| Example 20 | | Na + Y | 0.5%+0.5% | / | / | 95% | 5% | 70 |
| Example 21 | $LiMQNi_{0.5}Mn_{0.5}O_2$ | Na | 1% | Zr | 0.5% | 95% | 5% | 70 |
| Example 22 | | Na | 1% | Ti | 0.5% | 95% | 5% | 70 |
| Example 23 | | Na | 1% | W | 0.5% | 95% | 5% | 70 |
| Example 24 | | Na | 1% | Ta | 0.5% | 95% | 5% | 70 |
| Example 25 | | Na | 1% | Sn | 0.5% | 95% | 5% | 70 |

13

## 2. Button cell preparation method

(1) The positive electrode material, polyvinylidene fluoride (PVDF) and conductive carbon black (Super P) were added to N-methylpyrrolidone (NMP) at a specific weight ratio (90:5:5) to prepare a positive electrode slurry.

(2) Viscosity of the positive electrode slurry was adjusted to 3000 mPa·s to 6000 mPa s, the mixed slurry was evenly applied to one surface of the aluminum foil with a coating thickness of 40 $\mu$m, and then drying and rolling were performed to obtain a desired electrode, where humidity in the electrode processing and transport environment was 45%, and the coating weight on the electrode was 14 mg/cm$^2$. After drying, the positive electrode plate was obtained, and was cut into 14 mm circular plates.

(3) The separator was punched and cut into 18 mm circular plates; the negative electrode used was a lithium metal plate with a diameter of 18 mm; a solvent made by mixing propylene carbonate (PC), ethylene carbonate (EC) and diethyl carbonate(DEC)(1:1:1 by weight) was added with LiPF$_6$ and mixed well to obtain the electrolyte, where the mass concentration of LiPF$_6$ was 12.5%; and the positive electrode plate, separator, negative electrode plate (lithium plate), electrolyte, and accessories such as the battery housing were moved into a glove box (water content needs to be less than 11 ppm).

(4) The battery was assembled according to the bottom-up stacking order and the electrolyte was injected, followed by packaging using a packaging machine, to obtain a button cell.

## 3. Preparation method of lithium-ion battery

Preparation of positive electrode

(1) The positive electrode material, polyvinylidene fluoride (PVDF) and conductive carbon black (Super P) were added to N-methylpyrrolidone (NMP) at a specific weight ratio (96:2:2) to prepare a positive electrode slurry.

(2) Viscosity of the positive electrode slurry was adjusted to 3000 mPa·s to 6000 mPa·s, the mixed slurry was evenly applied to both surfaces of the aluminum foil with a single-side coating thickness of 40 $\mu$m, and then drying and rolling were performed to obtain a desired electrode, where humidity in the electrode processing and transport environment was 45%, and the coating weight on the electrode was 14 mg/cm$^2$.

Preparation of negative electrode

Artificial graphite, styrene-butadiene rubber and sodium carboxymethylcellulose (CMC) were mixed with deionized water in a mass ratio of 96:2:2. The mixture was stirred well to obtain a uniform negative electrode slurry. The negative electrode slurry was applied on a 12 $\mu$m thick copper foil. After steps of drying, cold pressing, cutting, and tab welding, the negative electrode was obtained.

Preparation of electrolyte

Under a dry argon atmosphere, a solvent made by mixing propylene carbonate (PC), ethylene carbonate (EC) and diethyl carbonate (DEC) (at a weight ratio of 1:1:1) was added with LiPF$_6$ and mixed well to obtain the electrolyte, where the mass percentage of LiPF$_6$ was 12.5%.

Preparation of separator

A polyethylene (PE) porous polymer film was used as a separator.

Preparation of lithium-ion battery

The positive electrode, the separator and the negative electrode were stacked in sequence so that the separator is sandwiched between the positive electrode and the negative electrode for separation. The resulting stack was wound to obtain a bare cell. The bare cell was put into an outer package, the electrolyte was injected, and then the outer package was sealed. Then, after chemical formation, degassing, trimming and other technological processes, a lithium-ion battery was obtained.

**4. Test method**

Thickness swelling rate test

The lithium-ion battery was charged to 4.35 V at 85°C, and stored for 12 h. Thickness changes of the lithium-ion battery were measured with a micrometer. An initial thickness of the lithium-ion battery before storage was defined as H0, and a thickness after storage was H1, and the thickness swelling rate was: (H1 - H0)/H0 × 100%.

Cycling capacity retention rate test at 45°C

The lithium-ion battery was put into a 45°C thermostat, charged to 4.35 V at a constant current of 1.5C, charged to a current of 0.05C at a constant voltage of 4.35 V, and then discharged to 3.0 V at a constant current of 4C. This was defined as a charge and discharge cycle. The lithium-ion battery was charged and discharged 300 cycles according to the foregoing method, and the discharge capacity of the first cycle and the discharge capacity of the 300th cycle of the lithium-ion battery were recorded. The cycling capacity retention rate = discharge capacity of the 300th cycle/discharge capacity of the first cycle × 100%.

Charge/discharge cycling test of button cell

At 25°C, the button cell was charged and discharged at a current of 0.04C in the voltage range of 2.8 V to 4.5 V to obtain a voltage capacity curve and a differential capacity versus voltage dQ/dV curve.

X-ray diffraction test

An X-ray powder diffractometer (XRD, model: Bruker D8 ADVANCE) was used to test the positive electrode material, where a target material is Cu K$\alpha$; and voltage/current was 40 kV / 40 mA, and the scanning angle range was 10° to 70°.

**5. Test results and analysis**

Button cells and lithium-ion batteries were prepared using the positive electrode materials in Comparative Examples 1 to 3 and Examples 1 to 25, the button cells were subjected to charge/discharge cycling tests, and the lithium-ion batteries were tested for thickness swelling rate and cycling capacity retention at 45°C. Table 2 shows test results of peak voltage, capacity proportion, and voltage difference of the button cells in the comparative examples and examples, as well as the thickness swelling rate and capacity retention rate of the lithium-ion batteries in the comparative examples and examples.

**Table 2**

| Cases | Vo1 (V) | Q1/Qt | $|Vo2 - Vr2|$ (V) | $|Vo1 - Vr1|$ (V) | Peak height of first oxidation/reduction peak (mAh/g/V) | a | c | c/a | Thickness swelling rate | Cycling capacity retention rate at 45°C |
|---|---|---|---|---|---|---|---|---|---|---|
| Comparative Example 1 | None | 0.11 | 0.33 | / | 0 | 2.8769 | 14.1812 | 4.929 | 40% | 70% |
| Comparative Example 2 | None | 0.12 | 0.32 | / | 0 | 2.8769 | 14.1862 | 4.931 | 40% | 71% |
| Comparative Example 3 | None | 0.10 | 0.38 | / | 0 | 2.8779 | 14.1912 | 4.931 | 30% | 76% |
| Example 1 | 4.35 | 0.14 | 0.19 | 0.27 | 724 | 2.8779 | 14.2489 | 4.951 | 18% | 80% |
| Example 2 | 4.34 | 0.16 | 0.19 | 0.27 | 822 | 2.8779 | 14.2486 | 4.951 | 18% | 81% |
| Example 3 | 4.34 | 0.16 | 0.14 | 0.20 | 822 | 2.8789 | 14.2486 | 4.949 | 18% | 82% |
| Example 4 | 4.34 | 0.16 | 0.11 | 0.15 | 822 | 2.8819 | 14.2486 | 4.944 | 18% | 83% |
| Example 5 | 4.34 | 0.16 | 0.09 | 0.13 | 822 | 2.8869 | 14.2486 | 4.936 | 18% | 84% |
| Example 6 | 4.34 | 0.14 | 0.12 | 0.15 | 626 | 2.8889 | 14.2491 | 4.932 | 17% | 86% |

| Cases | Vo1 (V) | Q1/Qt | \|Vo2 − Vr2\| (V) | \|Vo1 − Vr1\| (V) | Peak height of first oxidation/reduction peak (mAh/g/V) | a | c | c/a | Thickness swelling rate | Cycling capacity retention rate at 45°C |
|---|---|---|---|---|---|---|---|---|---|---|
| Example 7 | 4.34 | 0.14 | 0.13 | 0.17 | 470 | 2.8909 | 14.2561 | 4.930 | 16% | 88% |
| Example 8 | 4.34 | 0.14 | 0.09 | 0.16 | 600 | 2.8871 | 14.2486 | 4.935 | 12% | 87% |
| Example 9 | 4.34 | 0.14 | 0.09 | 0.15 | 700 | 2.8879 | 14.2489 | 4.934 | 13% | 86% |
| Example 10 | 4.34 | 0.16 | 0.04 | 0.05 | 822 | 2.8879 | 14.2495 | 4.934 | 18% | 85% |
| Example 11 | 4.30 | 0.23 | 0.09 | 0.13 | 1100 | 2.8879 | 14.3258 | 4.961 | 6% | 86% |
| Example 12 | 4.30 | 0.23 | 0.09 | 0.13 | 1200 | 2.8885 | 14.3258 | 4.960 | 6% | 85% |
| Example 13 | 4.34 | 0.16 | 0.02 | 0.03 | 822 | 2.8869 | 14.2486 | 4.936 | 18% | 83% |
| Example 14 | 4.32 | 0.20 | 0.02 | 0.03 | 1017 | 2.8919 | 14.2872 | 4.941 | 10% | 84% |
| Example 15 | 4.30 | 0.27 | 0.02 | 0.03 | 1409 | 2.8959 | 14.3644 | 4.960 | 3% | 82% |
| Example 16 | 4.34 | 0.14 | 0.12 | 0.17 | 724 | 2.8819 | 14.2293 | 4.938 | 23% | 86% |
| Example 17 | 4.32 | 0.18 | 0.12 | 0.17 | 920 | 2.8824 | 14.2679 | 4.950 | 13% | 87% |
| Example 18 | 4.30 | 0.23 | 0.12 | 0.17 | 1213 | 2.8834 | 14.3258 | 4.968 | 6% | 88% |
| Example 19 | 4.28 | 0.35 | 0.12 | 0.17 | 1800 | 2.8844 | 14.4421 | 5.007 | 1% | 87% |

| Cases | $V_{o1}$ (V) | Q1/Qt | $|V_{o2} - V_{r2}|$ (V) | $|V_{o1} - V_{r1}|$ (V) | Peak height of first oxidation/reduction peak (mAh/g/V) | a | c | c/a | Thickness swelling rate | Cycling capacity retention rate at 45°C |
|---|---|---|---|---|---|---|---|---|---|---|
| Example 20 | 4.27 | 0.27 | 0.05 | 0.08 | 1409 | 2.8839 | 14.3644 | 4.981 | 3% | 90% |
| Example 21 | 4.30 | 0.268 | 0.06 | 0.09 | 1400 | 2.8809 | 14.3144 | 4.969 | 3% | 91% |
| Example 22 | 4.22 | 0.280 | 0.04 | 0.07 | 1459 | 2.8809 | 14.3044 | 4.965 | 3% | 90% |
| Example 23 | 4.33 | 0.266 | 0.06 | 0.09 | 1389 | 2.8799 | 14.2944 | 4.964 | 2% | 92% |
| Example 24 | 4.47 | 0.258 | 0.07 | 0.10 | 1345 | 2.8794 | 14.3004 | 4.967 | 1% | 92% |
| Example 25 | 4.29 | 0.269 | 0.05 | 0.08 | 1401 | 2.8804 | 14.2984 | 4.964 | 3% | 91% |

According to Table 2, the differential capacity versus voltage dQ/dV curves of the button cells prepared by using the positive electrode materials in Examples 1 to 25 of this application have a first oxidation peak and a first reduction peak in the range of 4.2 V to 4.5 V, indicating that the positive electrode materials have improved lithium ion diffusion and electron diffusion ability due to presence of internal oxygen defects, and the material has a reversible charge/discharge capacity in the high voltage range of 4.2 V to 4.5 V. Therefore, the positive electrode materials have relatively high energy density and good structural stability. In addition, the presence of internal oxygen defects reduces the interface reaction activity of surface oxygen with the electrolyte, so the lithium-ion batteries in Examples 1 to 25 have lower gas production during high-temperature storage and excellent high-temperature cycling performance.

According to Table 2, when the discharge curve of the button cell satisfies $0.14 \leq Q1/Qt \leq 0.35$, the positive electrode material has a relatively high capacity in the high voltage range of 4.2 V to 4.5 V, so that the positive electrode material has higher energy density. In addition, the positive electrode materials of Examples 1 to 25 of this application satisfy $|Vo2 - Vr2| \leq 0.2$ V. This is because the positive electrode material in the range of 3.6 V to 4.0 V mainly experiences a transition process from hexagonal phase to monoclinic phase. This process involves transport of lithium ions and electrons. Due to the presence of oxygen defects, overall conductivity of the lithium ions and electrons in the material is enhanced, and the kinetic performance of the material is significantly improved. Therefore, the polarization in this process is reduced, making the difference between the peak voltages of the second oxidation peak and second reduction peak even smaller.

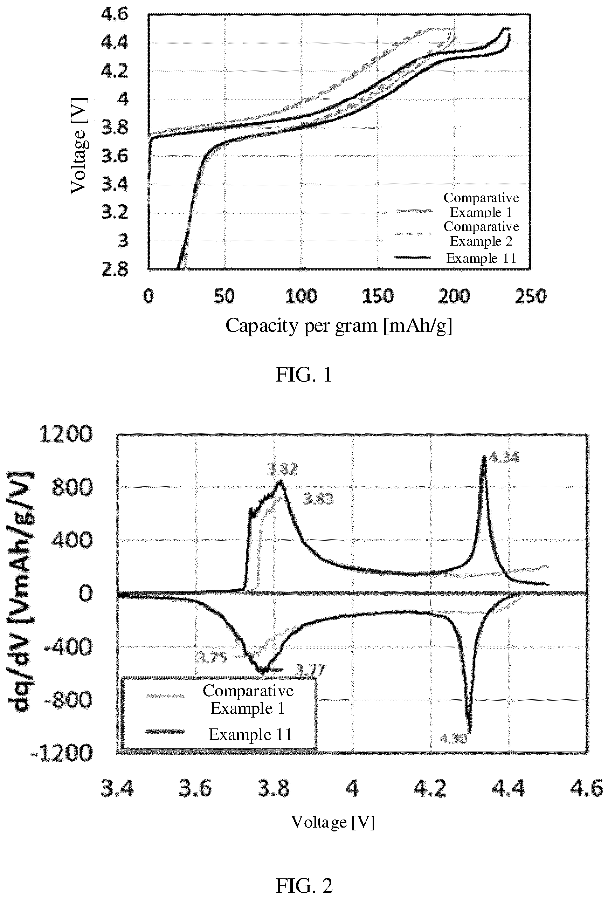

FIG. 1 shows a charge/discharge curves of the button cells in Comparative Example 1, Comparative Example 2 and Example 11. According to FIG. 1, the discharge curve of the button cell in Example 11 has a plateau in the range of 4.2 V to 4.5 V.

FIG. 2 shows the differential capacity versus voltage dQ/dV curves for the button cells in Comparative Example 1 and Example 11. It can be seen from FIG. 2 that the differential capacity versus voltage dQ/dV curve of the button cell in Example 11 has a first oxidation peak and a first reduction peak in the range of 4.2 V to 4.5 V, while the differential capacity versus voltage dQ/dV curve of the button cell in Comparative Example 1 does not have an oxidation peak or a reduction peak in the range of 4.2 V to 4.5 V.

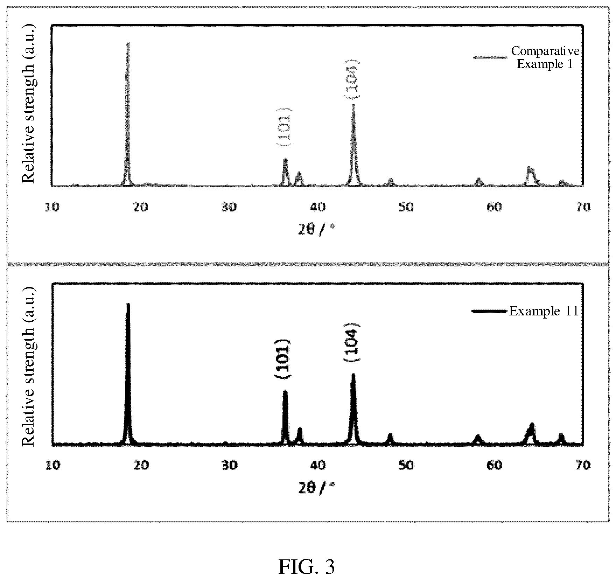

FIG. 3 shows X-ray diffraction patterns of the positive electrode materials in Comparative Example 1 and Example 11. The X-ray diffraction patterns of the positive electrode materials have diffraction peaks in the ranges of 16° to 20°, 34° to 38° and 42° to 46°.

References to "some embodiments", "some of the embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1. A positive electrode material, wherein when an electrode comprising the positive electrode material is assembled with lithium metal to form a button cell, and the button cell is charged and discharged at a current of 0.04C in the voltage range of 2.8 V to 4.5 V, a differential capacity versus voltage dQ/dV curve obtained has a first oxidation peak and a first reduction peak in the range of 4.2 V to 4.5 V.

2. The positive electrode material according to claim 1, wherein the positive electrode material satisfies at least one of the following conditions:

   (i) based on a mass of the positive electrode material, a peak height of the first oxidation peak is greater than or equal to 300 mAh/g/V; or
   (ii) based on a mass of the positive electrode material, an absolute value of a peak height of the first reduction peak is greater than or equal to 300 mAh/g/V.

3. The positive electrode material according to claim 1, wherein a peak voltage of the first oxidation peak is Vo1, a peak voltage of the first reduction peak is Vr1, and $|Vo1 - Vr1| \leq 0.3$ V.

4. The positive electrode material according to claim 1, wherein the differential capacity versus voltage dQ/dV curve has a second oxidation peak and a second reduction peak in the range of 3.6 V to 4.0 V, wherein a peak voltage of the second oxidation peak is Vo2, a peak voltage of the second reduction peak is Vr2, and |Vo2 - Vr2| ≤ 0.2 V.

5. The positive electrode material according to claim 1, wherein when the button cell is charged and discharged at a current of 0.04C in the voltage range of 2.8 V to 4.5 V, a discharge curve in a voltage capacity curve obtained has a plateau in the range of 4.2 V to 4.5 V, where a capacity in the range of 4.2 V to 4.5 V is Q1 in the discharge curve, and a capacity in the range of 3.0 V to 4.5 V is Qt in the discharge curve, satisfying 0.14 ≤ Q1/Qt ≤ 0.35.

6. The positive electrode material according to claim 1, wherein a lattice parameter a and a lattice parameter c of the positive electrode material satisfy at least one of the following conditions:

   (a)

   $$\text{(a) } 2.5 \text{ Å} \le a \le 3.0 \text{ Å;}$$

   (b)

   $$\text{(b) } 14.2 \text{ Å} \le c \le 15 \text{ Å;}$$

   or
   (c)

   $$\text{(c) } 4.93 \le c/a \le 5.10.$$

7. The positive electrode material according to claim 1, wherein an X-ray diffraction pattern of the positive electrode material has diffraction peaks in the ranges of 16° to 20°, 34° to 38° and 42° to 46°.

8. The positive electrode material according to claim 1, wherein the positive electrode material comprises a lithium transition metal composite oxide, wherein the lithium transition metal composite oxide comprises element M and element T, the element M comprises at least one of Na, K, or Y, the element T comprises at least one of Ni, Co, or Mn, and the lithium transition metal composite oxide satisfies at least one of the following conditions:

   (1) a molar percentage of Ni is greater than or equal to 50% based on a total molar content of the element T;
   (2) a molar percentage of Mn is less than or equal to 50% based on a total molar content of the element T;
   (3) a molar percentage of Co is less than or equal to 50% based on a total molar content of the element T;
   (4) a molar percentage of the element M is 0.1% to 5% based on a total molar content of the element T;
   (5) the lithium transition metal composite oxide further comprises element Q, wherein the element Q comprises at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf; and a molar percentage of the element Q is 0.1% to 5% based on a total molar content of the element T; or
   (6) the lithium transition metal composite oxide further comprises element M1, wherein M1 comprises at least one of F, Cl, Br, I, N, or P; and a molar percentage of the element M1 is 0.1% to 20% based on a total molar content of the element T.

9. A preparation method of positive electrode material, comprising the following steps:

   1) calcining a precursor with a lithium source, an element M source, optionally an element Q source and optionally an element M1 source at a first temperature for a first duration time under a first atmosphere condition;
   2) lowering the temperature to a second temperature and maintaining the second temperature for a second duration time under a second atmosphere condition; and
   3) finally lowering the temperature to room temperature; wherein

      the first atmosphere is selected from an air atmosphere, an oxygen atmosphere, or a mixed atmosphere of air and oxygen;
      the precursor comprises element T, and the element T comprises at least one of Ni, Co, or Mn;

the element M comprises at least one of Na, K, or Y;
the element Q comprises at least one of Ca, Sr, Ba, Al, Fe, B, Mg, Si, S, Ti, Cr, Fe, Cu, Zn, Ga, Zr, Mo, W, Nb, In, Sn, Pb, Sb, Ce, La, Ta, or Hf;
the element M1 comprises at least one of F, Cl, Br, I, N, or P; and
the second atmosphere is selected from at least one of an inert atmosphere or a mixed atmosphere of an inert gas and $H_2$.

10. The preparation method of positive electrode material according to claim 9, wherein the preparation method satisfies at least one of the following conditions:

(1) the first temperature is 700°C to 1200°C, and the first duration time is 10 h to 48 h;
(2) the second temperature is 350°C to 600°C, and the second duration time is 4 h to 24 h;
(3) the inert gas is selected from at least one of $N_2$, Ar, or He;
(4) a cooling rate in step 3) is greater than or equal to 50°C/min;
(5) based on a total volume of the mixed atmosphere of the inert gas and $H_2$, a volume percentage of $H_2$ in the mixed atmosphere of the inert gas and $H_2$ is less than or equal to 10%;
(6) the precursor comprises a hydroxide of element T;
(7) the lithium source comprises at least one of lithium carbonate or lithium hydroxide;
(8) the element M source comprises at least one of a carbonate or hydroxide of element M;
(9) the element Q source comprises an oxide of element Q;
(10) the element M1 source comprises at least one of an ammonium salt or a lithium salt of element M1;
(11) based on a total molar content of the element T, a molar percentage of Ni is greater than or equal to 50%;
(12) based on a total molar content of the element T, a molar percentage of Mn is less than or equal to 50%;
(13) based on a total molar content of the element T, a molar percentage of Co is less than or equal to 50%;
(14) based on a total molar content of the element T, a molar percentage of the element M is 0.1% to 5%;
(15) based on a total molar content of the element T, a molar percentage of the element Q is 0.1% to 5%; or
(16) based on a total molar content of the element T, a molar percentage of the element M1 is 0.1% to 20%.

11. An electrochemical apparatus, comprising the positive electrode material according to any one of claims 1 to 8 or a positive electrode material prepared according to the preparation method of claim 9 or 10.

12. An electronic apparatus, wherein the electronic apparatus comprises the electrochemical apparatus according to claim 11.

FIG. 1

FIG. 2

FIG. 3

## INTERNATIONAL SEARCH REPORT

| International application No. |
| --- |
| **PCT/CN2022/089911** |

| A. | CLASSIFICATION OF SUBJECT MATTER |
| --- | --- |
| | H01M 4/36(2006.01)i |

According to International Patent Classification (IPC) or to both national classification and IPC

| B. | FIELDS SEARCHED |
| --- | --- |
| Minimum documentation searched (classification system followed by classification symbols) | |
| | H01M |

Documentation searched other than minimum documentation to the extent that such documents are included in the fields searched

Electronic data base consulted during the international search (name of data base and, where practicable, search terms used)

CNPAT, WPI, EPODOC, CNKI: 电池, 锂, 正极, 镍钴锰, 三元, 层状, 电压容量微分, 煅烧, 烧结, 高温, 气氛, 空气, 氧气, 氮气, 惰性, 降温, 退火, 二次, 两次, battery, lithium, cathode, positive, NCM, ternary, layered, dQ/dV, calcinat+, sinter+, high w temperature, atmosphere, air, oxygen, nitrogen, inert, cool, annealing, twice

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2015220220 A (TODA KOGYO CORP.) 07 December 2015 (2015-12-07) description, paragraphs 2-63, and figure 1 | 1-8, 11-12 |
| X | CN 114361406 A (ECOPROL BM LIMITED COMPANY) 15 April 2022 (2022-04-15) description, paragraphs 61-271, and figure 1 | 1-8, 11-12 |
| A | JP 2018107053 A (HITACHI AUTOMOTIVE SYSTEMS LTD.) 05 July 2018 (2018-07-05) entire document | 1-12 |
| A | CN 109716564 A (BASF TODA BATTERY MATERIAL LLC et al.) 03 May 2019 (2019-05-03) entire document | 1-12 |
| A | KR 20010056566 A (LG CHEM INVESTMENT LTD.) 04 July 2001 (2001-07-04) entire document | 1-12 |
| A | CN 101834291 A (CENTRAL SOUTH UNIVERSITY) 15 September 2010 (2010-09-15) entire document | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 November 2022** | **15 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/089911**

| Patent document cited in search report | | | Publication date (day/month/year) | Patent family member(s) | | | Publication date (day/month/year) |
|---|---|---|---|---|---|---|---|
| JP | 2015220220 | A | 07 December 2015 | None | | | |
| CN | 114361406 | A | 15 April 2022 | JP | 2022064841 | A | 26 April 2022 |
| | | | | KR | 20220049178 | A | 21 April 2022 |
| | | | | US | 2022115658 | A1 | 14 April 2022 |
| | | | | EP | 3985761 | A1 | 20 April 2022 |
| JP | 2018107053 | A | 05 July 2018 | None | | | |
| CN | 109716564 | A | 03 May 2019 | CN | 114735761 | A | 12 July 2022 |
| | | | | KR | 20190052103 | A | 15 May 2019 |
| | | | | US | 2019221839 | A1 | 18 July 2019 |
| | | | | EP | 3518330 | A1 | 31 July 2019 |
| | | | | WO | 2018056139 | A1 | 29 March 2018 |
| | | | | JP | 2018056118 | A | 05 April 2018 |
| | | | | JP | 2018098174 | A | 21 June 2018 |
| | | | | EP | 3518330 | A4 | 11 November 2020 |
| | | | | US | 2021399292 | A1 | 23 December 2021 |
| | | | | KR | 20220070045 | A | 27 May 2022 |
| KR | 20010056566 | A | 04 July 2001 | None | | | |
| CN | 101834291 | A | 15 September 2010 | None | | | |

Form PCT/ISA/210 (patent family annex) (January 2015)